# EUROPÄISCHE PATENTANMELDUNG

(11) **EP 2 910 138 A1**
(43) Veröffentlichungstag der Anmeldung: **26.08.2015**
(21) Anmeldenummer: 14195345.5
(22) Anmeldetag: 28.11.2014
(51) Int. Cl.: A42C 1/04, A41C 5/00, B29C 51/14, B29L 31/48

(54) **Verfahren zum Herstellen von Textilien mit versteiften Abschnitten**

(30) Priorität: 04.12.2013 DE 102013113491; 10.01.2014 DE 102014100220; 10.01.2014 DE 102014100221
(71) Anmelder: Mayser GmbH & Co. KG, 88161 Lindenberg (DE)
(72) Erfinder: Jordan, Manfred, 88161 Lindenberg (DE)
(74) Vertreter: Kaufmann, Sigfrid

(57) **Zusammenfassung**

Die Erfindung betrifft ein Verfahren zum Herstellen von Textilien, die zumindest einen versteiften, schalenförmigen Abschnitt (11) aufweisen, wobei das Verfahren das Ausbilden einer Sandwichanordnung (7) aus einer weniger elastischen ersten Textillage (1), einer elastischeren zweiten Textillage (5), und mindestens einer zwischen den beiden Textillagen angeordneten und in flüssigem Zustand auf eine der Textillagen (1, 5) aufgebrachten Zwischenschicht (3) aus einem thermoplastisch umformbaren Schaummaterial sowie das thermische Umformen der Sandwichanordnung (7) unter Ausbildung eines oder mehrerer schalenförmigen Abschnitte (11) aufweist. Die Umformung erfolgt derart, dass die konkave Innenseite (13) der Schale (11) von der ersten Textillage (1) und die konvexe Außenseite (15) der Schale (11) von der zweiten Textillage (5) gebildet wird.

## Beschreibung

Die Erfindung betrifft ein Verfahren zum Herstellen von Textilien, die zumindest einen versteiften, schalenförmigen Abschnitt aufweisen, wobei diese Abschnitte mittels Moldens bzw. thermischen Umformens hergestellt werden.

Textilien mit versteiften Abschnitten sind in verschiedensten Ausführungen bekannt, so z. B. in Form von Kopfbedeckungen, wie Schirmmützen oder Baseballkappen, oder Büstenhaltern mit gemoldeten Büstenhalterkörbchen.

Versteifte und ausgeformte Abschnitte in Textilien werden mittels Wärmeeinwirkung (z. B. mittels thermoplastischen Umformens) aus Materialien, z. B. Stoffen oder Schaum, hergestellt, welche durch Wärme dauerhaft verformbar sind. Dadurch können derartige Textilien mit versteiften Abschnitten nahtlos ausgebildet werden.

WO 2004/026060 A2 beschreibt ein Verfahren zur Herstellung einer ausgeformten Kopfbedeckung, die sich aus drei Lagen zusammensetzt: einer inneren und einer äußeren Textillage sowie einer Schaumschicht als Zwischenlage. Insbesondere ist vorgesehen, mittels dieses Verfahrens Wendehüte zu gestalten, sodass der Hutträger beispielsweise die sichtbare Stofffarbe des Hutes den Gegebenheiten anpassen kann.

DE 93 11 632 U1 zeigt ein Verfahren zur Herstellung einer Kopfbedeckung, wonach zwei Stofflagen und eine Zwischenschicht aus Schaum jeweils von einer Rolle in eine Heizpresse eingeführt und dort unter erhöhter Temperatur und Druck miteinander verklebt und in Hutform gebracht werden.

Ein Verfahren zur Herstellung eines Büstenhalters mit gemoldeten Büstenhalterkörbchen ist aus DE 31 14 111 A1 bekannt, wonach zwischen zwei thermoplastischen Stofflagen ein Schaum mit inhomogener Dicke eingebracht wird. Durch das anschließende Umformen entsteht ein Büstenhalterkörbchen mit annähernd homogener Schaumstoffdicke. Für dieses Verfahren ist jedoch ein thermoplastischer textiler Stoff notwendig

Ein weiteres Verfahren zur Herstellung von Büstenhaltercups ist in US 2012/0225607 A1 offenbart. Demnach werden zwei Lagen, die jeweils aus auf Textil auflaminiertem PU-Schaum bestehen, zusammengefügt. Hier ist die Dicke der Schaumschicht konstant über die gesamte Fläche. Die beiden Lagen werden mit ihren Schaumschichten aufeinander gelegt, wobei zwischen die beiden Schaumschichten Gelpads oder Bügel eingebracht werden. Die Umformung zu Büstenhaltercups kann vor oder nach dem Aufbringen der zweiten Lage erfolgen.

Der Erfindung liegt die Aufgabe zugrunde, ein Verfahren zur Herstellung von Textilien mit versteiften, ausgeformten Abschnitten anzugeben, bei welchen der Stoffverzug infolge der Ausformung weitgehend eingeschränkt sowie eine Limitierung hinsichtlich der an der fertigen Textilie sichtbaren Stoffe weitgehend aufgehoben werden. Außerdem sollen textile Gebilde mit zusätzlich unversteiften Abschnitten herstellbar sein, wobei das Verfahren kostengünstig und flexibel für jede Art von textilem Endprodukt einsetzbar sein soll.

Gemäß der Erfindung wird ein Verfahren zum Herstellen von Textilien mit wenigstens einem versteiften, schalenförmigen Abschnitt (beispielsweise Büstenhalterkörbchen, Kopfbedeckungen, z. B. in Form von Baseballkappen oder Schirmmützen, etc.) bereitgestellt. Die Textilien weisen mindestens einen schalenförmigen Abschnitt bzw. eine Schale mit einer konvexen Außenseite und einer konkaven Innenseite auf, wobei eine Schale beispielsweise die Form eines Ellipsoidsegments oder eines elliptischen Paraboloids besitzen kann.

Des Weiteren kann eine solche Textilie mehrere gleichartige schalenförmige Abschnitte oder Schalen mit jeweils unterschiedlicher Form und/oder Größe, z. B. in Form einer Kopfbedeckung mit kugelsegmentartiger Schale und zylinderabschnittförmigem Schirm, aufweisen. Es kann vorgesehen sein, die Abschnitte integral miteinander verbunden (d. h. einteilig) auszubilden. Es kann jedoch auch vorgesehen sein, die Abschnitte voneinander getrennt auszubilden, wobei zwischen den versteiften Abschnitten der Textilie normaler, d. h. unversteifter, Stoff vorliegt.

Gemäß dem Verfahren werden eine erste Textillage und eine zweite Textillage bereitgestellt. Da von der ersten Textillage im späteren Verlauf die konkave Innenseite bzw. Innenfläche der Schale der Textilie gebildet wird, wird die erste Textillage auch als Innenlage oder als innere Textillage bezeichnet. Da von der zweiten Textillage im späteren Verlauf die konvexe Außenseite bzw. Außenfläche der Schale gebildet wird, wird die zweite Textillage auch als Außenlage oder äußere Textillage bezeichnet.

Die erste Textillage weist eine geringere Elastizität auf als die zweite Textillage. Dies kann z. B. erreicht werden, indem die innere erste Textillage einen geringeren Anteil an elastischen Fasern aufweist als die äußere zweite Textillage, indem die innere erste Textillage aus Fasern einer geringeren Elastizität besteht als die äußere zweite Textillage und/oder indem die innere erste Textillage mit einer größeren Dicke ausgebildet ist als die äußere zweite Textillage. Das Textilmaterial, aus dem die erste Textillage bzw. Stofflage besteht, weist somit eine geringere Elastizität auf als das Textilmaterial, aus dem die zweite Textillage bzw. Stofflage besteht.

Zwischen der ersten und der zweiten Textillage bzw. Stofflage wird zumindest in dem Bereich der auszubildenden Schale in einer Sandwichanordnung mindestens eine Zwischenschicht aus einem Schaummaterial angeordnet. Das Schaummaterial ist ein mittels Wärmeeinwirkung bei Temperaturen ab bzw. oberhalb einer materialspezifischen Verformungstemperatur verformbares Schaummaterial. Als Schaummaterial ist vorzugsweise ein thermoplastisch umformbares Schaummaterial vorgesehen; d. h. ein Schaummaterial, das bei Temperaturen ab einer materialspezifischen Verformungstemperatur thermoplastisch umformbar ist. Das Schaummaterial kann z. B. ein geschäumter Kunststoff bzw. ein Kunststoffschaum sein. Bevorzugt ist das Schaummaterial ein Streichschaum auf Polyurethanbasis, z. B. sog. Bluefoam der Firma Mayser GmbH & Co. KG, DE-88161 Lindenberg.

Die Sandwichanordnung wird bei einer Temperatur, die mindestens der Verformungstemperatur des Schaummaterials entspricht, derart unter Ausbildung einer Schale mit einer konkaven Innenseite und einer konvexen Außenseite umgeformt, dass die konkave Innenseite von der (weniger elastischen) ersten Textillage und die konvexe Außenseite von der (elastischeren) zweiten Textillage gebildet wird. Die Form der Schale kann z. B. im Wesentlichen der Form eines Kugelschalensegments entsprechen. Indem die äußere Textillage eine größere Elastizität aufweist als die innere Textillage, kann das Entstehen von Knitterstellen bzw. Stoffaufwerfungen der Textillagen beim Formen der Schale unterdrückt werden, ohne dass die Textillagen speziell vorgeformt werden müssten oder aus einem thermisch umformbaren Material bestehen müssten. Insbesondere kann jeder beliebige, bei der Umformtemperatur (chemisch) stabile Stoff für die Textillagen verwendet werden.

Zudem kann vorgesehen sein, dass das Umformen der Sandwichstruktur unter gleichzeitiger Ausbildung mehrerer, auch unterschiedlich geformter, Abschnitte (z. B. einer Kopfbedeckung mit Schirm oder Krempe) erfolgt, wobei die Abschnitte auch integral ausgebildet werden können, d. h., ein Abschnitt geht unmittelbar in den benachbarten Abschnitt über, wobei nur ein Formwerkzeug (aufweisend alle auszubildenden Abschnitte) zum Formen verwendet wird. Somit kann vorgesehen sein, mittels der thermischen Umformung ein komplexes textiles Gebilde in nur einem Umformungs-Schritt zu formen.

Es kann insbesondere vorgesehen sein, die erste und/oder die zweite Textillage aus einem zumindest teilweise bzw. abschnittsweise transparenten Textilmaterial auszubilden, sodass die an die jeweilige Textillage angrenzende Schaummaterial-Zwischenlage durch die Textillage hindurch sichtbar ist bzw. durch dieselbe "hindurchschimmert". Dadurch können optisch ansprechende Effekte erzielt werden, insbesondere indem die durch die Textillage hindurch sichtbare Schaummaterial-Zwischenschicht aus einem farbigen Schaum ausgebildet wird.

Die Sandwichanordnung weist eine oder mehrere Zwischenschichten bzw. Zwischenlagen aus einem Schaummaterial auf (auch als "Schaummaterial-Zwischenschichten" bezeichnet). Es kann insbesondere vorgesehen sein, zwischen der ersten und der zweiten Textillage zwei Schaummaterial-Zwischenschichten (z. B. aus unterschiedlichen Schaummaterialien) anzuordnen, wobei z. B. die an der ersten Textillage angeordnete Schaummaterial-Zwischenschicht andere Eigenschaften (z. B. eine andere Farbe) aufweisen kann als die an der zweiten Textillage angeordnete Schaummaterial-Zwischenschicht.

Die Lagen der derart gebildeten Sandwichanordnung werden bevorzugt stoffschlüssig miteinander verbunden und mittels Erwärmens unter Ausbildung der Schalenform (und optional auch mehrerer schalenförmiger Abschnitte) umgeformt. Es kann insbesondere vorgesehen sein, eine jeweilige Schaummaterial-Zwischenschicht stoffschlüssig mit einer oder allen daran angrenzenden Textillagen, d. h. mit der ersten und/oder zweiten Textillage, zu verbinden. Die unterschiedlichen Lagen können entweder vor der Umformung oder während der Umformung (mittels des Wärmeeintrags) stoffschlüssig miteinander verbunden werden.

Es kann z. B. vorgesehen sein, alle oder mehrere der Lagen der Sandwichanordnung zunächst im ebenen bzw. unverformten Zustand stoffschlüssig miteinander zu verbinden und die Sandwichanordnung danach unter Ausbildung der Schale umzuformen. Dies kann z. B. realisiert werden, indem eine jeweilige Schaummaterial-Zwischenschicht zunächst im flüssigen Zustand bereitgestellt und in Kontakt mit der ersten und/oder der zweiten Textillage gebracht wird, sodass beim Trocknen des Schaummaterials eine stoffschlüssige Verbindung zwischen dem Schaummaterial und der jeweiligen Textillage ausgebildet wird, wobei die thermische Umformung nach dem Verbinden der Lagen vorgenommen wird.

Gemäß einer Ausführungsform des Verfahrens wird demgemäß zunächst das Schaummaterial im flüssigen Zustand (z. B. mittels einer Rakel) schichtförmig ganzflächig oder in einzelnen Bereichen auf die innere erste Textillage aufgebracht, anschließend die äußere zweite Textillage auf das noch flüssige Schaummaterial aufgebracht, das Schaummaterial unter Ausbildung einer stoffschlüssigen Verbindung mit der ersten und der zweiten Textillage getrocknet, und die derart gebildete mehrlagige Sandwichanordnung mittels einer beheizten Form unter Ausbildung der Schale (oder mehrerer schalenförmiger Abschnitte) umgeformt.

Es kann jedoch auch vorgesehen sein, zwei oder mehrere der Lagen der Sandwichanordnung mittels eines Klebers miteinander zu verkleben; wobei das Verkleben vor oder während der thermischen Umformung erfolgen kann. So kann vorgesehen sein, die Zwischenschicht aus dem Schaummaterial mittels eines Klebers z. B. mit der zweiten Textillage zu verkleben.

Das Verkleben kann mit einem Heißkleber, z. B. mittels eines Klebewebvlieses bzw. eines Schmelzklebers, erfolgen; in diesem Fall kann das stoffschlüssige Verbinden der jeweiligen Lagen miteinander auch während der thermischen Umformung erfolgen (nämlich aufgrund des bei der thermischen Umformung erfolgenden Wärmeeintrags).

Gemäß einer Ausführungsform des Verfahrens wird dementsprechend zunächst das Schaummaterial im flüssigen Zustand (z. B. mittels einer Rakel) schichtförmig bzw. ganzflächig auf die innere erste Textillage aufgebracht und unter Ausbildung einer stoffschlüssigen Verbindung zu der ersten Textillage getrocknet, ein Schmelzkleber (z. B. in Form eines Klebevlieses) auf die verfestigte bzw. getrocknete Schaumschicht aufgebracht, die äußere zweite Textillage auf dem Schmelzkleber angeordnet, und die derart gebildete mehrlagige Sandwichanordnung mittels einer beheizten Form unter Ausbildung der Schale (und optional zusätzlicher schalenförmiger Abschnitte) umgeformt, wobei während des Heiß-Umformens die zweite Textillage mittels des Schmelzklebers stoffschlüssig mit der Schaummaterial-Zwischenschicht verklebt wird.

Zum Herstellen einer Schale bzw. einer Textilie, aufweisend mehrere versteifte Abschnitte, mit zwei Schaummaterial-Zwischenschichten kann vorgesehen sein, dass die beiden Zwischenschichten stoffschlüssig miteinander verbunden werden. Es kann z. B. vorgesehen sein, dass zunächst eine der beiden Schaummaterial-Zwischenschichten unter Ausbildung eines ersten Verbundelements stoffschlüssig mit der ersten Textillage verbunden wird, die andere der beiden Schaummaterial-Zwischenschichten unter Ausbildung eines zweiten Verbundelements stoffschlüssig mit der zweiten Textillage verbunden wird, und anschließend das erste und das zweite Verbundelement unter Ausbildung der Sandwichanordnung jeweils an den Schaumschichten stoffschlüssig miteinander verbunden und umgeformt werden.

Zum Herstellen einer Schale bzw. einer Textilie, aufweisend mehrere versteifte Abschnitte, mit zwei Schaummaterial-Zwischenschichten kann z. B. vorgesehen sein, dass das Schaummaterial der ersten Schaummaterial-Zwischenschicht im flüssigen Zustand ganzflächig oder in einzelnen Bereichen auf die erste Textillage aufgebracht und getrocknet wird, wobei sich eine stoffschlüssige Verbindung zwischen der ersten Textillage und der ersten Schaummaterial-Zwischenschicht ausbildet. In gleicher Weise wird das Schaummaterial der zweiten Schaummaterial-Zwischenschicht im flüssigen Zustand ganzflächig oder in Teilbereichen auf die zweite Textillage aufgebracht und unter Ausbildung einer stoffschlüssigen Verbindung zu der zweiten Textillage getrocknet. Anschließend werden die erste und die zweite Schaummaterial-Zwischenschicht stoffschlüssig miteinander verbunden (z. B. mittels Schmelzklebens bei der thermischen Umformung).

Die Sandwichanordnung kann insbesondere mittels einer beheizbaren bzw. beheizten Form unter Ausbildung der Schale derart umgeformt werden, dass von der weniger elastischen ersten Textillage die konkave Innenseite und von der elastischeren zweiten Textillage die konvexe Außenseite der Schale gebildet wird. Durch entsprechende Gestaltung der beheizbaren Form können zugleich mehrere schalenförmige Abschnitte der Textilie geformt werden. Demgemäß kann z. B. vorgesehen sein, dass die beheizbare Form einen ersten Schalen-Formungsabschnitt zum Formen einer kugelabschnittförmigen Schale, z. B. einer Kopfbedeckungs-Schale, und einen zweiten Schalen-Formungsabschnitt zum Formen einer zylinderhufförmigen Schale, z. B. der Abschirmung der Kopfbedeckung, aufweist. Das Umformen mittels der beheizten Form kann z. B. bei einer Temperatur von 180 °C bis 210 °C erfolgen (wobei die Umformtemperatur von der Wahl des Schaummaterials abhängen kann) und wird auch als "Heiß-Molden" bzw. "Heiß-Umformen" bezeichnet.

Die beheizte Form kann z. B. eine zweiteilige Form bzw. ein zweiteiliges Gesenk mit einer Unterschale und einer Oberschale (bzw. einem Obergesenk und einem Untergesenk) sein, wobei z. B. die Unterschale als Matrize und die Oberschale als Patrize fungieren kann, und wobei die Sandwichanordnung mit den beiden Textillagen und der Schaummaterial-Zwischenlage (sowie gegebenenfalls weiteren Zwischenlagen) zur Umformung mittels der Oberschale in die Unterschale gepresst wird. Die beheizte Form kann jedoch auch als einschalige bzw. einteilige Form ausgebildet sein. Nach Abschluss der Heiß-Umformung erfolgt ein Ausschneiden der geformten Textilienelemente, wobei überflüssiges Material entfernt wird.

Ein Verfahren zum Herstellen einer Textilie mit versteiften Abschnitten kann demgemäß z. B. folgende Schritte aufweisen:
1. Bereitstellen einer als Innenlage vorgesehenen ersten Stofflage und einer als Außenlage vorgesehenen zweiten Stofflage, wobei die Innenlage eine geringere Elastizität aufweist als die Außenlage (wobei z. B. für die Innenlage eine härtere, dichtere Stoffqualität verwendet wird und für die Außenlage eine demgegenüber weichere, leichtere Stoffqualität verwendet wird);
2. Beschichten der ersten und/oder der zweiten Stofflage mit einem noch flüssigen Schaummaterial (z. B. mit Bluefoam der Firma Mayser GmbH & Co. KG, DE-88161 Lindenberg);
3. Kaschieren der (nunmehr ggf. beschichteten) ersten und zweiten Stofflage unter Anordnung der Schaummaterial-Schicht(en) zwischen der ersten und der zweiten Stofflage unter Ausbildung einer mehrlagigen Sandwichanordnung; und
4. Verformen der mehrlagigen Sandwichanordnung mittels einer beheizten Form unter Ausbildung einer oder mehrerer Schalenformen, wobei von der ersten Stofflage die konkave Innenfläche und von der zweiten Stofflage die konvexe Außenfläche der Schalenformen gebildet wird; und
5. Zuschnitt der Textilie in eine (ggf. für eine Weiterverarbeitung) gewünschte Form;

Nach einem Verfahren gemäß einer der vorstehend beschriebenen Ausgestaltungen sind beispielsweise eine Kopfbedeckung, eine Büstenhalterschale oder ein Büstenhalter herstellbar.

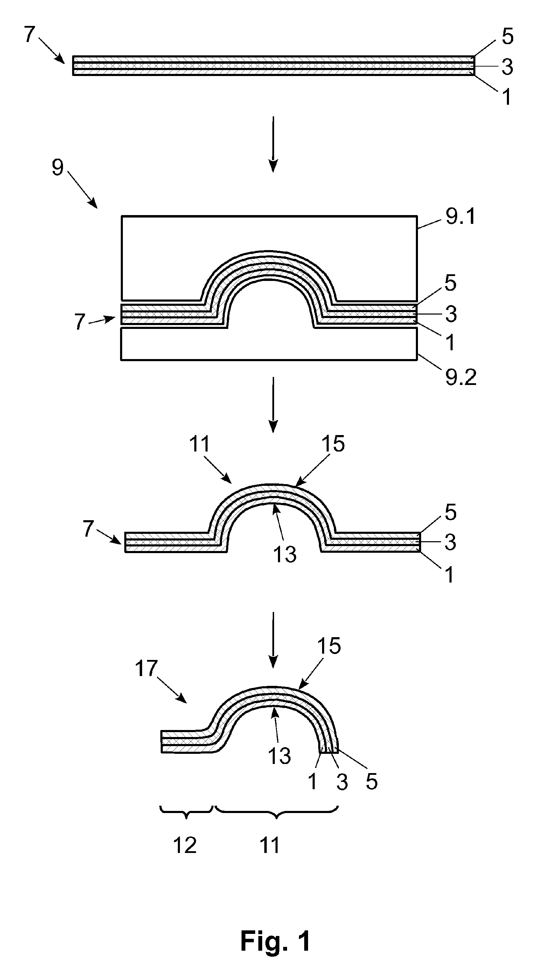

Die Erfindung wird nachfolgend anhand von Ausführungsbeispielen mit Bezug auf die beiliegenden Figuren veranschaulicht, wobei gleiche oder ähnliche Merkmale mit gleichen Bezugszeichen versehen sind; hierbei zeigen schematisch:
Figur 1 einen Verfahrensablauf zum Herstellen einer Kopfbedeckung gemäß einer ersten Ausführungsform; und
Figur 2 einen Verfahrensablauf zum Herstellen einer Büstenhalterschale gemäß einer zweiten Ausführungsform.
Gemäß einer in Figur 1 veranschaulichten ersten Ausführungsform des Verfahrens wird zunächst auf die erste Textillage 1 ein Schaummaterial 3 im flüssigen Zustand flächig aufgebracht. Anschließend wird auf die noch flüssige Schaummaterial-Schicht 3 die zweite Textillage 5 aufgebracht, sodass die Schaummaterial-Schicht 3 zwischen der ersten 1 und der zweiten 5 Textillage angeordnet ist. Das flüssige Schaummaterial 3 kontaktiert sowohl die erste Textillage 1 als auch die zweite Textillage 5 ganzflächig.

Das Schaummaterial 3 wird getrocknet und somit unter Ausbildung einer zellularen Schaumstruktur in den festen Aggregatzustand überführt, wodurch sowohl zwischen der Schaummaterial-Schicht 3 und der ersten Textillage 1 als auch zwischen der Schaummaterial-Schicht 3 und der zweiten Textillage 5 eine stoffschlüssige Verbindung ausgebildet wird. Die derart stoffschlüssig miteinander verbundenen Lagen 1, 3 und 5 bilden die Sandwichanordnung 7.

Das Textilmaterial, aus dem die erste Textillage 1 besteht, weist eine geringere Elastizität auf als das Textilmaterial, aus dem die zweite Textillage 5 besteht. Die zweite Textillage 5 besteht zudem in diesem Beispiel aus einem abschnittsweise transparenten Textilmaterial, sodass das Schaummaterial 3 durch die zweite Textillage 5 hindurch sichtbar ist bzw. durch dieselbe "hindurchschimmert". Das getrocknete Schaummaterial 3 ist ein Kunststoffschaum, der bei seiner materialspezifischen Verformungstemperatur (Umformtemperatur) thermoplastisch umformbar ist.

Die Sandwichanordnung 7 wird mittels der beheizbaren Form 9 unter Ausbildung des schalenförmigen Abschnitts 11 und des Abschirmungs-Abschnitts 12 umgeformt (wobei die Formgebung des Abschirmungs-Abschnitts 12 in Figur 1 nicht näher dargestellt ist). Der schalenförmige Abschnitt 11 wird mit der konkaven Innenseite 13 und der konvexen Außenseite 15 derart geformt, dass die konkave Innenseite 13 von der ersten Textillage 1 gebildet wird und die konvexe Außenseite 15 von der zweiten Textillage 5 gebildet wird. Der Abschirmungs-Abschnitt 12 liegt in Form eines Schirms vor (wie bei einer Schirmmütze oder einer Baseballkappe bekannt). Die beheizbare Form 9 ist als Beispiel ein zweiteiliges Gesenk mit einem als Matrize fungierenden Obergesenk 9.1 und einem als Patrize fungierenden Untergesenk 9.2. Während des Umformens wird die beheizbare Form 9 derart beheizt, dass ihre Temperatur mindestens der thermoplastischen Verformungstemperatur des Schaummaterials 3 entspricht.

Nach dem Entfernen der derart umgeformten Sandwichstruktur 7 aus der Form 9 wird der schalenförmige Abschnitt 11 zusammen mit dem Schirmabschnitt 12 unter Ausbildung einer Kopfbedeckung 17 in Form einer Schirmmütze ausgeschnitten. Die Schale 11 der Kopfbedeckung 17 weist somit eine konkave Innenseite 13, die von der ersten Textillage 1 gebildet ist, und eine konvexe Außenseite 15, die von der zweiten Textil-lage 5 gebildet ist, auf. Zudem liegt die Kopfbedeckung 17 einteilig vor, wobei die Schale 11 und der Schirm 12 integral miteinander ausgebildet sind. Die Kopfbedeckung 17 kann nunmehr weiteren Bearbeitungsschritten unterzogen werden, z. B. einer Randversäuberung, wobei der durch das Ausschneiden des schalenförmigen Abschnitts 11 aus der umgeformten Sandwichstruktur resultierende Rand verklebt und umgenäht wird.

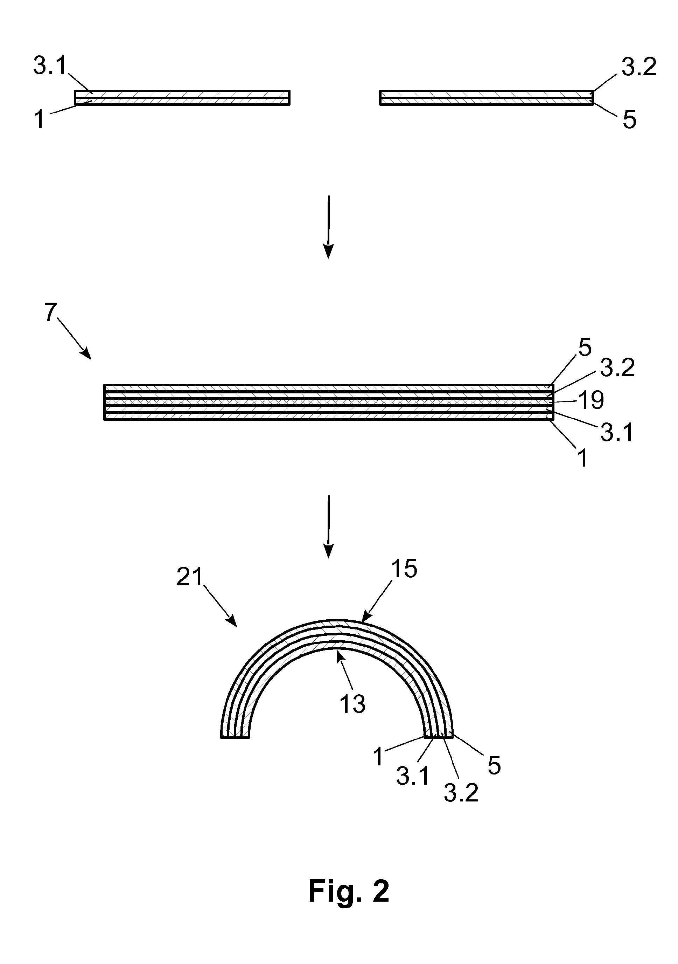

Figur 2 veranschaulicht ein Verfahren gemäß einer zweiten Ausführungsform, wobei das Verfahren zum Herstellen der Büstenhalterschale 21 mit zwei Schaummaterial-Zwischenlagen 3.1 und 3.2 dient. Bei dem Verfahren gemäß Figur 2 werden die beiden Schalen 21 des Büstenhalters separat hergestellt.

Gemäß dem Verfahren werden die erste Textillage 1 und die zweite Textillage 5 bereitgestellt, wobei die erste Textillage 1 eine geringere Elastizität aufweist als die zweite Textillage 5. Ein erstes Schaummaterial 3.1 wird im flüssigen Zustand schichtförmig auf die erste Textillage 1 aufgebracht und unter Ausbildung einer stoffschlüssigen Verbindung zu der ersten Textillage 1 getrocknet. Ein zweites Schaummaterial 3.2 wird im flüssigen Zustand schichtförmig auf die zweite Textillage 5 aufgebracht und unter Ausbildung einer stoffschlüssigen Verbindung zu der zweiten Textillage 5 getrocknet.

Das aus der ersten Textillage 1 und der ersten Schaummaterialschicht 3.1 bestehende erste Verbundelement und das aus der zweiten Textillage 5 und der zweiten Schaummaterialschicht 3.2 bestehende zweite Verbundelement werden stoffschlüssig miteinander verbunden, indem die Sandwichanordnung 7 gebildet wird.

Dazu wird ein Schmelzkleber in Form des Klebevlieses 19 auf der ersten Schaummaterial-Schicht 3.1 angeordnet und die zweite Schaummaterial-Schicht 3.2 auf dem Schmelzkleber 19 abgelegt, sodass die beiden Schaummaterial-Schichten 3.1 und 3.2 zwischen der ersten Textillage 1 und der zweiten Textillage 5 angeordnet sind.

Anschließend wird die derart gebildete Sandwichanordnung 7 analog zu der mit Bezug auf Figur 1 beschriebenen Vorgehensweise mittels einer beheizten Form 9 unter Ausbildung der Büstenhalterschale 21 mit einer konkaven Innenseite 13 und einer konvexen Außenseite 15 thermisch umgeformt (die beheizbare Form 9 ist in Figur 2 nicht dargestellt); wobei zudem durch den während des Umformens erfolgenden Wärmeeintrag der Schmelzkleber 19 aktiviert wird und die beiden Schaummaterial-Schichten 3.1, 3.2 mittels des Schmelzklebers 19 stoffschlüssig miteinander verbunden werden. Sollten die beiden Schaummaterialien 3.1 und 3.2 unterschiedliche thermoplastische Verformungstemperaturen aufweisen, erfolgt die Umformung bei einer Temperatur, die mindestens der höheren der beiden Verformungstemperaturen entspricht. Es ist jedoch bevorzugt, dass die beiden Schaummaterialien 3.1 und 3.2 (im Wesentlichen) dieselbe Verformungstemperatur aufweisen.

Die Formgebung erfolgt derart, dass von der ersten Textillage 1 die konkave Innenseite 13 der Büstenhalterschale 21 gebildet wird und von der zweiten Textillage 5 die konvexe Außenseite 15 der Schale 21. In diesem Beispiel besteht die an der Innenseite 13 angeordnete erste Schaummaterial-Schicht 3.1 aus einem weißen Schaummaterial, wohingegen die an der Außenseite 15 angeordnete zweite Schaummaterial-Schicht 3.2 aus einem farbigen Schaummaterial besteht. Zudem besteht die äußere zweite Textillage 5 aus einem abschnittsweise transparenten Textilmaterial, sodass das farbige zweite Schaummaterial 3.2 durch die zweite Textillage hindurch sichtbar ist.

### Liste der verwendeten Bezugszeichen

- 1: (innere) erste Textillage
- 3: Schaummaterial-Zwischenschicht
- 3.1: erstes Schaummaterial
- 3.2: zweites Schaummaterial
- 5: (äußere) zweite Textillage
- 7: Sandwichanordnung
- 9: beheizbare / beheizte Form
- 9.1: Obergesenk
- 9.2: Untergesenk
- 11: schalenförmiger Abschnitt / Kopfbedeckungs-Schale
- 12: sattelförmiger Abschnitt / Schirm
- 13: konkave Innenseite
- 15: konvexe Außenseite
- 17: Kopfbedeckung / Schirmmütze / Baseballkappe
- 19: Schmelzkleber / Klebevlies
- 21: Büstenhalterschale

## Patentansprüche

1. Verfahren zum Herstellen einer Textilie mit wenigstens einem versteiften, schalenförmigen Abschnitt (11), aufweisend folgende Schritte:
- Bereitstellen einer ersten (1) und einer zweiten (5) Textillage, wobei die erste Textillage (1) eine geringere Elastizität aufweist als die zweite Textillage (5),
- stoffschlüssiges Verbinden der ersten Textillage (1) mit einer Zwischenschicht (3, 3.1) aus einem Schaummaterial, das in festem Zustand bei Temperaturen ab einer Verformungstemperatur thermoplastisch umformbar ist, durch flächiges Aufbringen des Schaummaterials im flüssigen Zustand auf zumindest einen Teilbereich der Oberfläche der ersten Textillage (1) unter Ausbildung der Zwischenschicht (3, 3.1),
- Ausbilden einer Sandwichanordnung (7) aus der ersten Textillage (1), der zweiten Textillage (5) und mindestens einer zumindest in einem Teilbereich jeweils zwischen der ersten und der zweiten Textillage angeordneten Zwischenschicht (3, 3.1, 3.2) aus einem Schaummaterial, das bei Temperaturen ab einer Verformungstemperatur thermoplastisch umformbar ist, und
- Umformen der Sandwichanordnung (7) bei einer Temperatur, die mindestens der Verformungstemperatur entspricht, unter Ausbildung der schalenförmigen Abschnitte (11) der Textilie mit jeweils einer konkaven Innenseite (13) und einer konvexen Außenseite (15) derart, dass die konkave Innenseite (13) von der ersten Textillage (1) und die konvexe Außenseite (15) von der zweiten Textillage (5) gebildet wird.

2. Verfahren nach Anspruch 1, wobei schalenförmige Abschnitte in Form eines Kugelsegments während des Umformens ausgebildet werden.

3. Verfahren nach Anspruch 1 oder 2, wobei die an der zweiten Textillage (5) angeordnete Zwischenschicht (3, 3.2) aus dem Schaummaterial vor dem Umformen stoffschlüssig mit der zweiten Textillage (5) verbunden wird.

4. Verfahren nach Anspruch 3, wobei die an der zweiten Textillage (5) angeordnete Zwischenschicht (3, 3.2) aus dem Schaummaterial stoffschlüssig mit der zweiten Textillage (5) verbunden wird, indem die zweiten Textillage (5) mit dem Schaummaterial im flüssigen Zustand in Kontakt gebracht und das Schaummaterial anschließend getrocknet wird.

5. Verfahren nach Anspruch 1 oder 2, wobei die an der zweiten Textillage (5) angeordnete Zwischenschicht (3, 3.2) aus dem Schaummaterial mittels Verklebens stoffschlüssig mit der zweiten Textillage (5) verbunden wird.

6. Verfahren nach Anspruch 5, wobei die an der zweiten Textillage (5) angeordnete Zwischenschicht (3, 3.2) aus dem Schaummaterial mit einem Heißkleber mittels Verklebens während des Umformens stoffschlüssig mit der zweiten Textillage (5) verbunden wird.

7. Verfahren nach einem der Ansprüche 1 bis 6, wobei die erste (1) und/oder die zweite (5) Textillage zumindest teilweise transparent ist.

8. Verfahren nach einem der Ansprüche 1 bis 7, wobei die Sandwichanordnung (7) zwei zwischen der ersten (1) und der zweiten (5) Textillage angeordnete Zwischenschichten (3.1, 3.2) aufweist, wobei jede der Zwischenschichten aus einem Schaummaterial besteht.

9. Verfahren nach Anspruch 8, wobei die an der zweiten Textillage (5) angeordnete Zwischenschicht (3.2) stoffschlüssig mit der zweiten Textillage verbunden wird.

10. Verfahren nach Anspruch 8 oder 9, wobei die beiden Zwischenschichten (3.1, 3.2) stoffschlüssig miteinander verbunden werden.
